Europäisches Patentamt

European Patent Office

Office européen des brevets

(19)

(11) **EP 1 178 633 A1**

(12) **EUROPÄISCHE PATENTANMELDUNG**

(43) Veröffentlichungstag:
**06.02.2002 Patentblatt 2002/06**

(51) Int Cl.$^7$: **H04L 12/56**, H04Q 11/04

(21) Anmeldenummer: **00116724.6**

(22) Anmeldetag: **02.08.2000**

| | |
|---|---|
| (84) Benannte Vertragsstaaten:<br>**AT BE CH CY DE DK ES FI FR GB GR IE IT LI LU MC NL PT SE**<br>Benannte Erstreckungsstaaten:<br>**AL LT LV MK RO SI** | (71) Anmelder: **SIEMENS AKTIENGESELLSCHAFT**<br>**80333 München (DE)**<br><br>(72) Erfinder: **Huber, Siegfried, Dr.**<br>**85084 Reichertshofen (DE)** |

(54) **Kanalbündelsystem und Vermittlungseinrichtung**

(57) In einem System KBS von bis zu N linear mit Kanaladressen 0..N-1 adressierten Kanälen werden Kanalbündel KB durch intermittierende - d.h. zumindest teilweise Kanaladressen auslassende - Zuordnung von Kanälen gebildet. Hierdurch kann beispielsweise bei der Erweiterung von Vermittlungsanlagen um weitere Koppelmodule KM der Umfang der Kanalbündel KB vorteilhaft ohne Einschränkung der freien Anschlussmöglichkeit von Ausgangsstufen AS mit einfachem und doppeltem Durchsatz geändert werden.

FIG 1

$\{$ KA/KSA (KB$_0$) | max. 2*N/K $\}$:
0 - 0*K/2$^x$ + 0*K/2$^x$, 1 - 0*K/2$^x$ + 0*K/2$^x$
0 - 0*K/2$^x$ + 1*K/2$^x$, 1 - 0*K/2$^x$ + 1*K/2$^x$
0 - 0*K/2$^x$ + 2*K/2$^x$, 1 - 0*K/2$^x$ + 2*K/2$^x$
.
.
0 - 0*K/2$^x$ + (N/K-1)*K/2$^x$, 1 - 0*K/2$^x$ + (N/K-1)*K/2$^x$

$\{$ KA/KSA (KB$_2$) | max. 2*N/K $\}$:
2 - 0*K/2$^x$ + 0*K/2$^x$, 3 - 0*K/2$^x$ + 0*K/2$^x$
2 - 0*K/2$^x$ + 1*K/2$^x$, 3 - 0*K/2$^x$ + 1*K/2$^x$
2 - 0*K/2$^x$ + 2*K/2$^x$, 3 - 0*K/2$^x$ + 2*K/2$^x$
.
2 - 0*K/2$^x$ + (N/K-1)*K/2$^x$, 3 - 0*K/2$^x$ + (N/K-1)*K/2$^x$

$\{$ KA/KSA (KB$_{K-2}$) | max. N/K $\}$:
(K-2) - (2$^x$-1)*K/2$^x$ + 0*K/2$^x$
(K-2) - (2$^x$-1)*K/2$^x$ + 1*K/2$^x$
(K-2) - (2$^x$-1)*K/2$^x$ + 2*K/2$^x$
.
(K-2) - (2$^x$-1)*K/2$^x$ + (N/K-1)*K/2$^x$

X = 0: KA
X > 0: KSA

$\{$ KA/KSA (KB$_{K-1}$) | max. N/K $\}$:
(K-1) - (2$^x$-1)*K/2$^x$ + 0*K/2$^x$
(K-1) - (2$^x$-1)*K/2$^x$ + 1*K/2$^x$
(K-1) - (2$^x$-1)*K/2$^x$ + 2*K/2$^x$
.
(K-1) - (2$^x$-1)*K/2$^x$ + (N/K-1)*K/2$^x$

EP 1 178 633 A1

**Beschreibung**

Informationsströme werden in zeitgemäßen Kommunikationsnetzen häufig in Kanalbündeln übermittelt. Dies ist regelmäßig dann der Fall, wenn die Kapazität eines einzigen Kanals kleiner ist als die Kapazität, die für die Übermittlung eines Informationsstroms erforderlich ist.

Ein Beispiel hierfür findet sich bei der Migration der kontinuierlichen Informationsströme eines Transportnetzes - z.B. SDH oder SONET - in ein neu errichtetes paketorientiertes Netz - z.B. IP oder ATM. Hierbei erhöht sich durch das Hinzufügen von Paketköpfen die Kapazität, die für die Übermittlung der kontinuierlichen Informationsströme erforderlich ist. Hat beispielsweise der kontinuierliche Bitstrom einer SDH Festverbindung eine Bitrate von 622 Mbit/s, so weist der Bitstrom nach einer Konvertierung in einen ATM orientierten Zellenstrom zumindest eine Bitrate von 687 Mbit/s auf. Ist nun die Übertragungstechnik, die auf den physikalischen Verbindungen des Kommunikationsnetzes eingesetzt wird, beispielsweise auf eine maximale Übertragungskapazität von 622 Mbit/s begrenzt, kann der ATM orientierte Zellenstrom nicht in einem einzigen Übertragungskanal übertragen werden, da die Übertragungskapazität der Übertragungstechnik auf dem physikalischen Übertragungskanal nicht ausreicht. In diesem Fall werden die Informationen eines derartigen Verkehrsstroms auf ein mehrere Übertragungskanäle umfassendes Kanalbündel aufgeteilt.

Ein weiteres Beispiel ist eine Kanalbündelung am Ausgang eines Koppelfelds einer zeitgemäßen Vermittlungsanlage, die immer dann erforderlich ist, wenn die Übermittlungskapazität des Koppelfelds sowie der Ein- und Ausgangsstufen (I/O-Stufen) der Vermittlungsanlage höher ist als die Übertragungskapazität der einzelnen Übertragungskanäle in der Verbindungstechnik zwischen dem Koppelfeld und den angeschlossenen I/O-Stufen. Haben beispielsweise die I/O-Stufen eine Kapazität von 622 Mbit/s und die Übertragungskanäle eine Kapazität von 155 Mbit/s, so ist zwischen den I/O-Stufen und dem Koppelfeld grundsätzlich der Einsatz eines vier Übertragungskanäle umfassenden Kanalbündels erforderlich. Habe des weiteren das Koppelfeld eine Kapazität von 5 Gbit/s, so können an das Koppelfeld auf diese Weise acht Paare von I/O-Stufen angeschlossen werden. Das Koppelfeld weist dazu in dieser beispielhaften Konfiguration zumindest 32 Eingangs- und 32 Ausgangsports zu je 155 Mbit/s auf. Dies wird üblicherweise durch einen Zusatz '32/32' angezeigt, wobei die Ports linear mit Portadressen 0..31 adressiert sind.

Üblicherweise wird die Aufteilung eines Verkehrsstroms auf mehrere Kanäle vor dem Sender verborgen, indem ein Kanalbündel durch eine eindeutige Adresse - auch Kanalbündeladresse genannt - gekennzeichnet wird. Von dem Sender wird der Verkehrsstrom beim Senden lediglich mit der eindeutigen Kanalbündeladresse gekennzeichnet. Die Aufteilung des Verkehrsstroms auf die einzelnen Kanäle des angezeigten Kanalbündels erfolgt durch eine Aufteilungsfunktion. Diese kann von dem Sender separiert oder in den Sender integriert sein. Ein Beispiel für eine separierte Aufteilungsfunktion liefert obige Vermittlungsanlage. Hier wird ein Verkehrsstrom von einer Eingangsstufe mit einer Kanalbündeladresse gekennzeichnet, die zu einer bestimmten Ausgangsstufe führt. Die Aufteilungsfunktion ist dabei in dem Koppelfeld realisiert. Von ihr wird die Aufteilung des vermittelten Verkehrsstroms auf die Kanäle des angezeigten Kanalbündels bewirkt.

Diese funktionale Trennung zwischen Adressierung einerseits und Aufteilung andererseits bringt den Vorteil mit sich, dass die Anzahl der einem Kanalbündel zugeordneten Kanäle variiert werden kann, ohne dass die Adressierung des Kanalbündels im Sender geändert werden muss. Grundvoraussetzung für die Funktionsfähigkeit der Aufteilungsfunktion ist selbstverständlich, dass der Aufteilungsfunktion die Zuordnung der Kanäle zu den Kanalbündeln bekannt ist.

Sehr schöne Vorteile bietet diese funktionale Trennung bei der Erweiterung obiger Vermittlungsanlage. Diese Erweiterung kann mit unveränderten Hardwareelementen durch den Einsatz sog. Parallelwegkoppelfelder bewirkt werden. Hierbei werden innerhalb der Vermittlungsanlage mehrere Koppelfelder eingesetzt. Die Verkehrsströme werden in den Eingangsstufen in eine der Anzahl der Koppelfelder entsprechende Zahl von Teilverkehrsströmen aufgeteilt und separat in den Koppelfeldern vermittelt, um eine gleichmäßige Auslastung der Koppelfelder zu erreichen. Hierdurch reduziert sich die Anzahl der Übertragungskanäle, die zwischen den I/O-Stufen und einem bestimmten der Koppelfelder je Kanalbündel erforderlich sind. Beim Einsatz von zwei Koppelfeldern 32/32 sind in obigem Beispiel nur noch zwei Übertragungskanäle je Kanalbündel erforderlich; und beim Einsatz von vier Koppelfeldern 32/32 ist ein einziger Übertragungskanal je Kanalbündel ausreichend. Verallgemeinert gilt: Bei Einsatz von Koppelfeldern N/N ($N = 2^M$, $0 \leq M$) und einer maximal anschließbaren Anzahl von K kapazitätsgleichen Ausgangsstufen ($K = 2^L$, $0 \leq L \leq M$) umfasst jedes Kanalbündel bis zu N/K Kanäle, wobei die Ports der Koppelfelder N/N üblicherweise linear mit Adressen 0..N-1 adressiert sind. Vorteilhaft kann nun eine derartige Erweiterung ohne Änderungen der Zieladressen im Sender bewirkt werden. Voraussetzung hierfür ist, dass die Adressierung der Kanalbündel auch bei einer Änderung der Anzahl der Kanäle pro Kanalbündel unverändert bleibt. Dies kann durch eine entsprechend angepasste Zuordnung der Kanäle zu den Kanalbündeln realisiert werden.

Bekannt ist eine lineare Zuordnung von Kanälen zu den Kanalbündeln, d.h. es werden jeweils eine Mehrzahl von Kanälen mit linear aufeinanderfolgenden Kanaladressen zu Kanalbündeln zusammengefasst. Hierbei wird davon ausgegangen, dass die N Kanäle mit Kanaladressen 0..N-1 gekennzeichnet sind. Die Kanalbündel werden dann jeweils mit der Kanaladresse des Kanals gekennzeichnet, der die niedrigste Kanaladresse aller zum jeweiligen Kanalbündel gehörenden Kanäle aufweist. Umfasst ein Kanalbündel z.B. die Kanäle 4, 5, 6 und 7, so erhält es die Kanalbündeladresse 4. Ein an das Kanalbündel 4 (d.h. das Kanalbündel mit Kanalbündeladresse 4) gesendeter Verkehrsstrom wird von der Aufteilungsfunktion auf die Kanäle 4, 5, 6 und 7 aufgeteilt. Bei einem Koppelfeld 32/32 (d.h. N = 32) mit maximal acht (d.h. K = 8) Ausgangsstufen ergeben sich hierbei z.B. acht Kanalbündel zu je 32/8 = 4 Kanälen nach folgendem Schema:

    1) Kanalbündel 0 umfasst die Kanäle 0 - 3.
    2) Kanalbündel 4 umfasst die Kanäle 4 - 7.
    ...
    8) Kanalbündel 28 umfasst die Kanäle 28 - 31.

Diese Kanalbündelung ist jedoch in Kommunikationsnetzen, für die eine hohe Systemzuverlässigkeit gefordert ist, problematisch. Die geforderte hohe Systemzuverlässigkeit wird üblicherweise durch mehrere Maßnahmen bewirkt. Eine übliche Maßnahme besteht darin, dass die Koppelfelder der Vermittlungsanlagen redundant ausgeführt werden. Bei einer weiteren Maßnahme werden die Ausgangsstufen an zwei redundante Übertragungswege des Kommunikationsnetzes angeschlossen und der Verkehrsstrom wird gleichzeitig auf beiden Wegen übermittelt (sog. 1+1 Redundanz). Diese 1+1 Redundanz ist jedoch üblicherweise optional vorgesehen, d.h. der Einsatz erfolgt lediglich fallweise. Die Ausgangsstufen werden üblicherweise derart installiert, dass jede Ausgangsstufe wahlfrei mit oder ohne 1+1 Redundanz konfiguriert werden kann. Wird bei einer derartigen Ausgangsstufe auf die redundante Übertragung verzichtet, so kann durch Verteilung des Verkehrsstroms auf die beiden trotzdem vorgesehenen Übertragungswege doppelt soviel übertragen werden wie von einer Ausgangsstufe mit aktivierter 1+1 Redundanz. An eine derartige "ungesicherte" Ausgangsstufe müssen folglich entweder zwei Kanalbündel zu je N/K Kanälen oder ein "gedoppeltes" Kanalbündel mit 2N/K Kanälen geführt werden, wobei wegen der eindeutigen Kanalbündeladressierung letztere Lösung vorteilhafter ist.

Eine lineare Zuordnung von Kanälen zu Kanalbündeln führt jedoch bei einer Koppelfelderweiterung zu einer Einschränkung der freien Anschlussmöglichkeit von Ausgangsstufen mit einfachem und doppeltem Durchsatz. Dies sei an einem Beispiel erläutert. Es einen an ein Koppelfeld 32/32 fünf Ausgangsstufen in folgender Ausführung angeschlossen: 1) doppelt, 2) doppelt, 3) einfach, 4) einfach und 5) doppelt. Dies führt zu folgenden Kanalbündeln:

    1) Kanalbündel 0, umfassend die Kanäle 0 - 7.
    2) Kanalbündel 8, umfassend die Kanäle 8 - 15.
    3) Kanalbündel 16, umfassend die Kanäle 16 - 19.
    4) Kanalbündel 20, umfassend die Kanäle 20 - 23.
    5) Kanalbündel 24, umfassend die Kanäle 24 - 31.

Nach Erweiterung der Vermittlungsanlage um ein zweites Koppelfeld 32/32 sind diese Kanalbündel nach Halbierung der Anzahl der zugeordneten Kanäle wie folgt ausgebildet:

    1) Kanalbündel 0 umfasst die Kanäle 0 - 3.
    2) Kanalbündel 8 umfasst die Kanäle 8 - 11.
    3) Kanalbündel 16 umfasst die Kanäle 16 - 17.
    4) Kanalbündel 20 umfasst die Kanäle 20 - 21.
    5) Kanalbündel 24 umfasst die Kanäle 24 - 27.

Nach dieser Umstellung der Kanalbündel können nun zusätzliche Kanalbündel 4, 6, 12, 14, 18, 22, 28 und 30 zum Anschluss neuer Ausgangsstufen vorgesehen werden. Nachteilig ist, dass lediglich die Kanalbündel 4 + 6, 12 + 14 und 28 + 30 zu gedoppelten Kanalbündeln 4, 12 und 28 zusammengefasst werden können, jedoch nicht die Kanalbündel 18 und 22. Als Folge können an die Kanalbündel 18 und 22 lediglich Ausgangsstufen mit einfachem Durchsatz, d.h. mit 1+1 Redundanz, jedoch nicht mit doppeltem Durchsatz angeschlossen werden, d.h. die freie Anschlussmöglichkeit von Ausgangsstufen mit einfachem Durchsatz und von Ausgangsstufen mit doppeltem Durchsatz ist eingeschränkt.

Eine Aufgabe der Erfindung liegt darin, die Zuordnung von Kanälen zu Kanalbündeln zu verbessern. Die Aufgabe wird durch die Merkmale des Patentanspruchs 1 gelöst.

Ein wesentlicher Aspekt der Erfindung besteht in einem Kanalbündelsystem mit folgenden Merkmalen:

-    das System umfasst bis zu N Kanäle mit $N = 2^M$ und $0 \leq M$, die mit Kanaladressen 0 .. N-1 adressiert sind,
-    die Kanäle sind zu maximal K Kanalbündeln mit $K = 2^L$ und $0 \leq L \leq M$ zusammengefasst,
-    jedes Kanalbündel umfasst bis zu $Y_{KB}*N/K$ Kanäle mit $1 \leq Y_{KB} \leq K$, wobei $Y_{KB}$ für jedes Kanalbündel individuell festgelegt ist,

- die Kanaladressen der zu einem bestimmten Kanalbündel zusammengefassten Kanäle sind in dem Kanaladressraum

$$\{ (Z_{KB}+i) + j*K \mid 0 \leq i \leq Y_{KB}-1, 0 \leq j \leq N/K-1 \}$$

enthalten, wobei $Z_{KB}$, $0 \leq Z_{KB} \leq K-Y_{KB}$, die Kanaladresse des Kanals mit der niedrigsten, für dieses Kanalbündel zulässigen Kanaladresse ist.

Einige wesentliche Vorteile der Erfindung seien im folgenden genannt:

- Die Anzahl der einem Kanalbündel zugewiesenen Kanäle kann wegen der kanalbündelindividuellen Festlegung von $Y_{KB}$ vorteilhaft sehr flexibel konfiguriert werden.
- Bei einer Erweiterung des Kanalbündelsystems auf mehr als N Kanäle kann jedes der dann zusätzlich möglichen Kanalbündel wegen der individuellen Festlegung von $Y_{KB}$ unabhängig von den bereits bestehenden Kanalbündeln dimensioniert werden. Wird beispielsweise das Kanalbündelsystem auf 2*N Kanäle mit dann maximal 2*K Kanalbündel erweitert, dann können die zusätzlichen Kanalbündel mit frei wählbaren Kanaladressräumen

$$\{ (Z_{KB}+i) + j*K \mid 0 \leq i \leq Y_{KB}-1, 0 \leq j \leq N/K-1 \}$$

$Z_{KB}$, $K \leq Z_{KB} \leq 2*K-Y_{KB}$ gebildet werden.
- Wegen der durch die Formel beschriebenen Regelmäßigkeit der Kanaladressräume kann ein Kanalbündel allein durch Angabe der Werte $Z_{KB}$ und $Y_{KB}$ festgelegt werden. Eine individuelle Zuordnung von Kanälen zu Kanalbündeln ist vorteilhaft nicht zwingend erforderlich.
- Die Kanalbündel können jedoch wahlweise sehr fein dimensioniert werden, da eine Unterdimensionierung durch Nichtzuweisung von einzelnen Kanälen vorgesehen ist.

In einer Ausgestaltung des erfindungsgemäßen Kanalbündelsystems gilt $1 \leq Y_{KB} \leq 2$ - Anspruch 2. Dieses Kanalbündelsystem ist besonders schön in Systemen einsetzbar, in denen eine hohe Systemzuverlässigkeit mit Hilfe einfach redundanter Ausführung von Systemkomponenten erreicht wird.

Eine Variante des erfindungsgemäßen Kanalbündelsystems ist durch folgende weitere Merkmale gekennzeichnet - Anspruch 3:

- die Kanäle sind in $2^x$ Kanalgruppen zu je $N/2^X$ Kanälen mit $1 \leq X \leq M$ gruppiert, wobei jeder Kanal genau einer Kanalgruppe zugeordnet ist,
- die Kanalgruppen sind linear mit Gruppenadressen $0 .. 2^X-1$ adressiert,
- die Kanäle sind in jeder der Kanalgruppen linear mit Kanalsubadressen $0 .. N/2^x-1$ adressiert,
- die Kanaladresse eines bestimmten Kanals ergibt sich durch Voranstellen der Gruppenadresse vor die Kanalsubadresse des Kanals.
- die Kanalsubadressen der zu einem bestimmten Kanalbündel zusammengefassten Kanäle sind in dem Kanalsubadressraum

$$\{ (Z_{KB}+i) - S*K/2^X + j*K/2^X \mid 0 \leq i \leq Y_{KB}-1, 0 \leq j \leq N/K-1 \}$$

enthalten, wobei $Z_{KB}$, $0 \leq Z_{KB} \leq K-Y_{KB}$, die Kanaladresse des Kanals mit der niedrigsten, für dieses Kanalbündel zulässigen Kanaladresse und S, $0 \leq S \leq 2^x-1$, die Gruppenadresse der zugehörigen Kanalgruppe ist.

Dieses Kanalbündelsystem ist besonders schön in Vermittlungseinrichtungen einsetzbar, in denen Koppelmodule N/N durch $2^X$ Koppelelemente $N/(N/2^x)$ realisiert werden, da hierbei in jedem der Koppelelemente $N/(N/2^X)$ identische Kanalsubadressen eingesetzt und somit die Koppelelemente $N/(N/2^X)$ identisch ausgeführt und konfiguriert werden können.

Nach einer Weiterbildung des erfindungsgemäßen Kanalbündelsystems ist vorgesehen, dass die Kanaladresse $Z_{KB} - S*K/2^x$ jeweils als Kanalbündeladresse des zugehörigen Kanalbündels ausgebildet ist - Anspruch 4. Die Kanalbündeladressen sind somit wegen $0 \leq Z_{KB} \leq K-Y_{KB}$ grundsätzlich einem linear geschlossenen Kanalbündeladressraum $\{Z_{KB}\}$ entnommen. Insbesondere sind, sofern $Y_{KB} = 1$ für jedes der Kanalbündel gilt, die dann K Kanalbündel linear mit Kanalbündeladressen $Z_{KB}$, $0 \leq Z_{KB} \leq K\text{-}1$ adressiert. Dies führt zu einem sehr einfachen, kompakten und übersichtlichen Kanalbündeladress-Schema. Zudem sind bei Erweiterung des Kanalbündelsystems die zusätzlichen Kanalbündeladressen einem zu dem bisher Kanalbündeladressraum $\{ Z_{KB} \mid 0 \leq Z_{KB} \leq K\text{-}Y_{KB} \}$ disjunkten Kanalbündeladressraum entnommen, z.B. bei Verdoppelung der Anzahl von Kanälen dem Kanalbündeladressraum $\{Z_{KB} \mid K \leq Z_{KB} \leq 2^*K\text{-}Y_{KB} \}$.

Eine erfindungsgemäße Verwendung des Kanalbündelsystems betrifft eine Vermittlungseinrichtung mit zumindest einer Eingangsstufe, zumindest einem Koppelmodul mit N Eingangskanälen und N Ausgangskanälen, zumindest einer Ausgangsstufe und zumindest einem erfindungsgemäßen Kanalbündelsystem zur Verbindung des Koppelmoduls mit den Ausgangsstufen - Anspruch 5. Hierdurch können Ausgangsstufen mit unterschiedlichen Durchsätzen wahlfrei an die Koppelmodule angeschlossen werden.

Nach einer Weiterbildung der erfindungsgemäßen Verwendung ist jedes Koppelmodul durch ein separates Kanalbündelsystem mit den Ausgangsstufen verbunden - Anspruch 6. Hierdurch können in jedem Koppelmodul vorteilhaft identische Adressierungs-Schemata zum Einsatz kommen, d.h. die Koppelmodule können identisch ausgeführt und konfiguriert werden. Somit ist z.B. bei redundant ausgeführten Koppelmodulen eine sequentielle Erweiterung der Vermittlungseinrichtung möglich, indem die redundanten Koppelmodule erst dann erweitert werden, wenn die Erweiterung der primären Koppelmodule abgeschlossen ist.

Gemäß einer Variante der erfindungsgemäßen Verwendung ist vorgesehen, dass bei einem mit $2^X$ Koppelelementen mit jeweils N Eingangskanälen und $N/2^X$ Ausgangskanälen realisierten Koppelmodul die Adressen der Ausgangskanäle der Koppelelemente mit den Kanalsubadressen identisch sind - Anspruch 7. Somit entfällt eine ansonsten erforderliche Adressanpassungsfunktion.

Entsprechend einer Ausgestaltung der erfindungsgemäßen Verwendung wird dem Koppelmodul der Wert $K/2^X$ sowie zumindest für jedes genutzte Kanalbündel der Wert $Y_{KB}$ angezeigt - Anspruch 8. Dies ermöglicht die eingangs beschriebene funktionale Trennung von Adressierung und Aufteilung von Verkehrsströmen, wobei die Aufteilung auf die einzelnen Kanäle der Kanalbündel bewirkt wird.

Weitere vorteilhafte Ausgestaltungen der Erfindung ergeben sich aus den unter- oder nebengeordneten Ansprüchen.

Die Erfindung wird im folgenden anhand von Ausführungsbeispielen, die in den Figuren dargestellt sind, näher erläutert. Hierbei ist zur vereinfachten Darstellung in allen Figuren $1 \leq Y_{KB} \leq 2$ gewählt, wobei von einem einschlägigen Fachmann die dargestellten Ausführungsbeispiele problemlos auf Werte $Y_{KB} > 2$ verallgemeinert werden können. Es zeigen:

Figur 1     eine erfindungsgemäße Bündelbildung am Beispiel einer Vermittlungseinrichtung mit einem Koppelmodul N/N

Figur 2     eine erfindungsgemäße Bündelbildung am Beispiel einer Vermittlungseinrichtung mit zwei Koppelmodulen N/N

Figur 3     eine schematische Darstellung einer erfindungsgemäßen Anzeige des Wertes $K/2^X$ und der Werte $Y_{KB}$

Figur 4     erfindungsgemäße Kanalbündelsysteme in einer Vermittlungseinrichtung mit zwei Koppelmodulen 32/32

Figur 5     erfindungsgemäße Kanalbündelsysteme in einer Vermittlungseinrichtung mit vier Koppelmodulen 32/32, d.h. mit verdoppeltem Durchsatz im Vergleich zu der in Figur 4 dargestellten Vermittlungseinrichtung

Figur 6     eine erfindungsgemäße Anzeige des Werts K und der Werte $Y_{KB}$ für die Kanalbündelsysteme nach Figur 4

Figur 7     eine erfindungsgemäße Anzeige des Werts K und der Werte $Y_{KB}$ für die Kanalbündelsysteme nach Figur 5

Figur 8     erfindungsgemäße Kanalbündelsysteme in einer Vermittlungseinrichtung mit zwei Koppelmodulen 32/32, die jeweils durch zwei Koppelelemente 32/16 realisiert sind

Figur 9     erfindungsgemäße Kanalbündelsysteme in einer Vermittlungseinrichtung mit vier Koppelmodulen 32/32, die jeweils durch zwei Koppelelemente 32/16 realisiert sind, d.h. mit verdoppeltem Durchsatz im Vergleich zu dem in Figur 8 dargestellten Vermittlungseinrichtung

Figur 10     eine erfindungsgemäße Anzeige des Werts $K/2^x$ und der Werte $Y_{KB}$ für die Kanalbündelsysteme nach Figur 8

Figur 11    eine erfindungsgemäße Anzeige des Werts $K/2^X$ und der Werte $Y_{KB}$ für die Kanalbündelsysteme nach Figur 9

In den Figuren sind, zum Teil in verallgemeinerter Form, Ausführungsbeispiele erfindungsgemäßer Kanalbündelsysteme KBS dargestellt, die beispielhaft in Vermittlungseinrichtungen mit Eingangsstufen ES, Ausgangsstufen AS und zwischengeschalteten Koppelmodulen KM zu Verbindung der Koppelmodule KM mit den Ausgangsstufen AS eingesetzt werden. Dieser Einsatz ist jedoch nicht einschränkend zu verstehen. Für einen einschlägigen Fachmann ist offensichtlich, dass das erfindungsgemäße Kanalbündelsystem in beliebigen Systemen eingesetzt werden kann. Insbesondere ist der Begriff "Kanal" nicht eingeschränkt auf physikalische Übertragungskanäle bzw. durch Leitungen realisierte Kanäle einer Verbindungstechnik zu verstehen. Vielmehr sind auch logische Kanäle, z.B. in Form von ATM-Verbindungen, TDMA-Kanälen oder IP-Flows, umfasst.

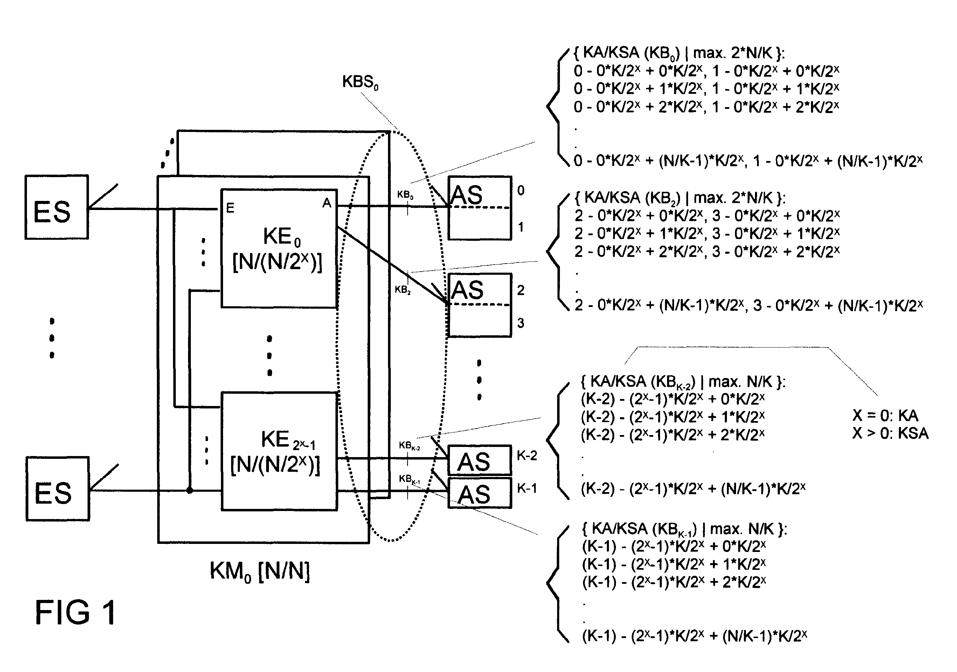

In Figur 1 ist in verallgemeinerter Form am Beispiel einer Vermittlungseinrichtung die erfindungsgemäße Zuordnung von Kanälen zu Kanalbündeln eines erfindungsgemäßen Kanalbündelsystems KBS dargestellt. Die Vermittlungseinrichtung umfasst mehrere Eingangsstufen ES, K Ausgangsstufen AS und ein zwischengeschaltetes Koppelmodul KM [N/N], welches durch $2^X$ Koppelelemente KE [N/(N/$2^X$)] realisiert wird. Die Eingangsstufen ES sind parallel an N Eingänge E jedes der Koppelelemente KE und die Kanäle des Kanalbündelsystems KBS an $N/2^X$ Ausgänge A je Koppelelement KE angeschlossen. Somit dient das Kanalbündelsystem KBS in diesem Ausführungsbeispiel zur Verbindung des Koppelmoduls KM [N/N] mit den Ausgangsstufen AS. Die Kanalbündel KB umfassen max. $Y_{KB}*N/K$ Kanäle, wobei $Y_{KB}$ individuell je Kanalbündel KB festgelegt ist.

Die Ausgangsstufen $AS_0$ und $AS_2$ sind beispielsweise ohne, die Ausgangsstufen $AS_{K-2}$ und $AS_{K-1}$ mit 1+1 Redundanz realisiert. Die Ausgangsstufen $AS_0$ und $AS_2$ übermitteln deshalb Verkehrsströme mit im Vergleich zu den Ausgangsstufen $AS_{K-2}$ und $AS_{K-1}$ verdoppeltem Durchsatz, d.h. $Y_{KB} = 2$ für die Ausgangsstufen $AS_0$, $AS_2$ und $Y_{KB} = 1$ für die Ausgangsstufen $AS_{K-2}$, $AS_{K-1}$. Die Ausgangsstufe $AS_0$ ist hierbei durch das Kanalbündel $KB_0$ und die Ausgangsstufe $AS_2$ durch das Kanalbündel $KB_2$ an das Koppelelement $KE_0$, die Ausgangsstufe $AS_{K-2}$ durch das Kanalbündel $KB_{K-2}$ und die Ausgangsstufe $AS_{K-1}$ durch das Kanalbündel $KB_{K-1}$ an das an das Koppelelement $KE_{(2^X)-1}$ des Koppelmoduls KM angeschlossen.

Die Kanalbündel $KB_0$ - $KB_{K-1}$ bilden das N Kanäle umfassende Kanalbündelsystem KBS, in dem die Kanäle linear fortlaufend mit Kanaladressen KA adressiert sind mit KA $\in$ {0..N-1}. Die Kanaladressen KA der zu einem bestimmten Kanalbündel KB zusammengefassten Kanäle sind hierbei in folgenden Adressräumen enthalten:

Adressraum für Kanalbündel $KB_0$:

$$\{ 0 - 0*K/2^X + 0*K/2^X, 1 - 0*K/2^X + 0*K/2^X,$$

$$0 - 0*K/2^X + 1*K/2^X, 1 - 0*K/2^X + 1*K/2^X,$$

$$0 - 0*K/2^X + 2*K/2^X, 1 - 0*K/2^X + 2*K/2^X,$$

$$...$$

$$0 - 0*K/2^X + (N/K-1)*K/2^X, 1 - 0*K/2^X + (N/K-1)*K/2^X \}$$

Adressraum für Kanalbündel $KB_2$:

$$\{ 2 - 0*K/2^X + 0*K/2^X, 3 - 0*K/2^X + 0*K/2^X,$$

$$2 - 0*K/2^X + 1*K/2^X, 3 - 0*K/2^X + 1*K/2^X,$$

$$2 - 0*K/2^X + 2*K/2^X, 3 - 0*K/2^X + 2*K/2^X,$$

$$...$$

$$2 - 0*K/2^X + (N/K-1)*K/2^X, 3 - 0*K/2^X + (N/K-1)*K/2^X \}$$

Adressraum für Kanalbündel $KB_{K-2}$:

$$\{ (K-2) - (2^X-1)*K/2^X + 0*K/2^X, $$

$$(K-2) - (2^X-1)*K/2^X + 1*K/2^X$$

$$(K-2) - (2^X-1)*K/2^X + 2*K/2^X$$

$$...$$

$$(K-2) - (2^X-1)*K/2^X + (N/K-1)*K/2^X \}$$

Adressraum für Kanalbündel $KB_{K-1}$:

$$\{ (K-1) - (2^X-1)*K/2^X + 0*K/2^X, $$

$$(K-1) - (2^X-1)*K/2^X + 1*K/2^X$$

$$(K-1) - (2^X-1)*K/2^X + 2*K/2^X$$

$$...$$

$$(K-1) - (2^X-1) *K/2^X + (N/K-1)*K/2^X \}$$

Gilt $X = 0$, so ist das Koppelmodul KM durch ein einziges Koppelelement KE [N/N] realisiert. In diesem Fall enthält jeder der Adressräume Kanaladressen KA. Da sodann zudem $(2^x-1) = 0$ gilt, sind - verallgemeinert dargestellt - die Kanaladressen KA der zu einem bestimmten Kanalbündel KB zusammengefassten Kanäle in dem Kanaladressraum

$$\{ (Z_{KB}+i) + j*K \mid 0 \le i \le Y_{KB}-1, 0 \le j \le N/K-1 \}$$

enthalten, wobei $Z_{KB}$, $0 \le Z \le K-Y_{KB}$, die Kanaladresse KA des Kanals mit der niedrigsten, für dieses Kanalbündel KB zulässigen Kanaladresse KA ist. $Z_{KB}$, die Kanalbündeladresse des zugehörigen Kanalbündels KB, ist demnach im vorliegenden Ausführungsbeispiel

- für das Kanalbündel $KB_0$: 0
- für das Kanalbündel $KB_2$: 2
- für das Kanalbündel $KB_{K-2}$: K-2
- für das Kanalbündel $KB_{K-1}$: K-1

Gilt $X > 0$, so ist das Koppelmodul KM durch $2^X$ Koppelelemente KE $[N/(N/2^x)]$ realisiert. In diesem Fall sind die Kanäle, passend zu der Anzahl von Koppelelementen KE, in $2^x$ Kanalgruppen zu je $N/2^x$ Kanälen gruppiert, wobei die Kanalgruppen linear mit Gruppenadressen GA mit $GA \in \{0..2^x-1\}$ und die Kanäle in jeder der Kanalgruppen linear mit Kanalsubadressen KSA mit $KSA \in \{0..N/2^x-1\}$ adressiert sind. Die Kanaladresse KA ergibt sich hierbei durch Voranstellen der Gruppenadresse GA vor die Kanalsubadresse KSA des Kanals. Jeder der obigen Adressräume enthält dann Kanalsubadressen KSA. Da zudem $(2^X-1) > 0$ gilt, sind - verallgemeinert dargestellt - die Kanalsubadressen KSA der zu einem bestimmten Kanalbündel KB zusammengefassten Kanäle in dem Kanalsubadressraum

$$\{ (Z_{KB}+i) - S*K/2^X + j*K/2^X \mid 0 \le i \le Y_{KB}-1, 0 \le j \le N/K-1 \}$$

enthalten, wobei $Z_{KB}$, $0 \le Z \le K-Y_{KB}$, die Kanaladresse KA des Kanals mit der niedrigsten, für dieses Kanalbündel KB zulässigen Kanaladresse KA und S, $0 \le S \le 2^X-1$, die Gruppenadresse GA der zugehörigen Kanalgruppe ist. $Z_{KB} - S*K/2^x$, die Kanalbündeladresse des zugehörigen Kanalbündels KB, ist hierbei

- für das Kanalbündel $KB_0$: 0
- für das Kanalbündel $KB_2$: 2

- für das Kanalbündel $KB_{K-2}$: $K/2^x-2 = [(K-2)-(2^x-1)*K/2^x]$
- für das Kanalbündel $KB_{K-1}$: $K/2^x-1 = [(K-1)-(2^x-1)*K/2^x]$

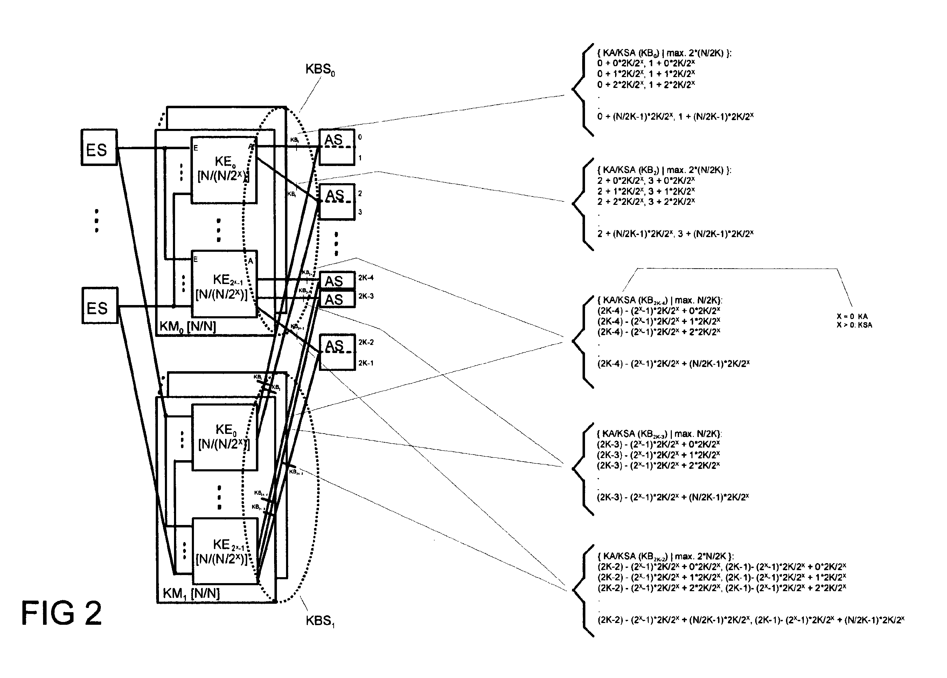

Der Wert $K/2^X$ aus der die Kanalsubadressräume beschreibenden Formel (siehe Figur 2) bzw. der Wert K (= $K/2^X$ mit X = 0) aus der die Kanaladressräume beschreibenden Formel (siehe Figur 1) wird auch als 'Schrittweite' bezeichnet. Wegen den hiermit verbundenen Sprüngen in den Adressräumen werden die erfindungsgemäßen Kanalbündel KB auch als 'intermittierende' Kanalbündel KB bezeichnet.

In Figur 2 ist in einem weiteren, in verallgemeinerter Form gehaltenen, Ausführungsbeispiel die gleiche Vermittlungseinrichtung wie in Figur 1, jedoch erweitert um ein zweites, mit dem Koppelmodul $KM_0$ baugleiches Koppelmodul $KM_1$ dargestellt. Jedes der beiden Koppelmodule KM ist hierbei durch ein separates Kanalbündelsystem KBS mit den Ausgangsstufen AS verbunden, wobei beide Kanalbündelsysteme KBS infolge der symmetrischen Anordnung der Koppelmodule KM identisch ausgebildet sind. Wegen der Erweiterung sind nun bis zu 2K Ausgangsstufen AS möglich. Entsprechend kann jedes der Kanalbündelsysteme KBS in diesem Ausführungsbeispiel bis zu 2K Kanalbündel KB umfassen. Der Umfang der einzelnen Kanalbündel KB reduziert sich hierbei auf N/2K Kanäle. Die Adressräume der einzelnen Kanalbündel KB sowie die entsprechenden Kanalbündeladressen KBA erhält man, indem in die Formeln aus Figur 1 für den Wert K den Wert 2K einsetzt.

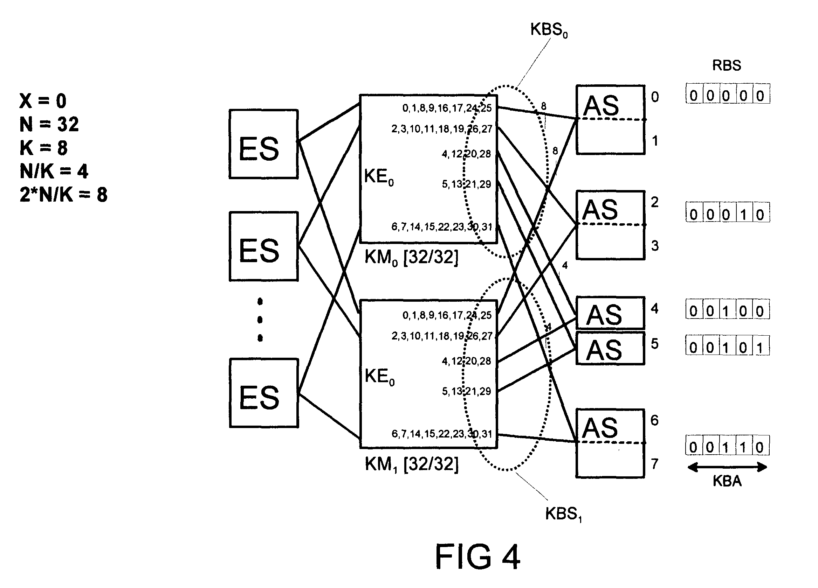

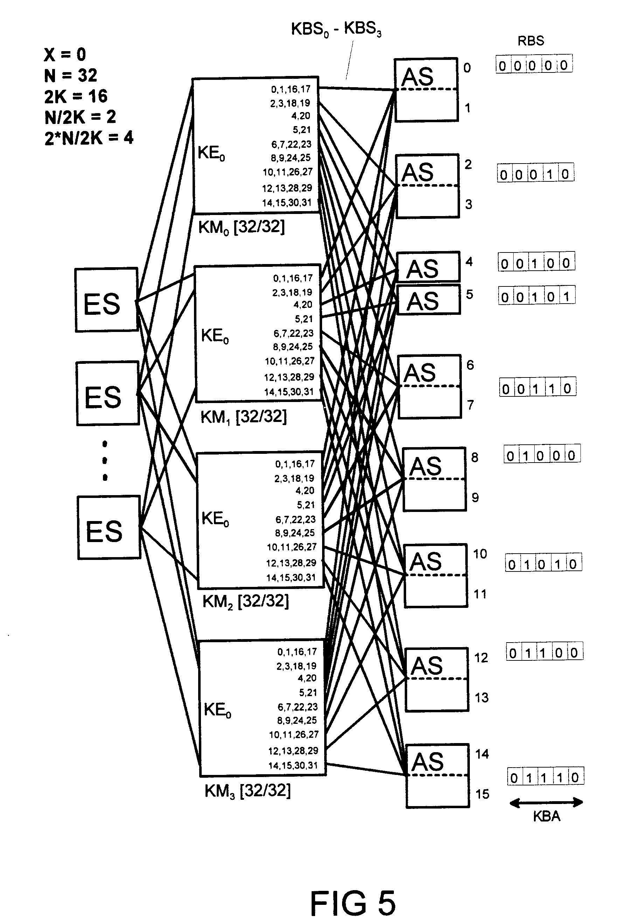

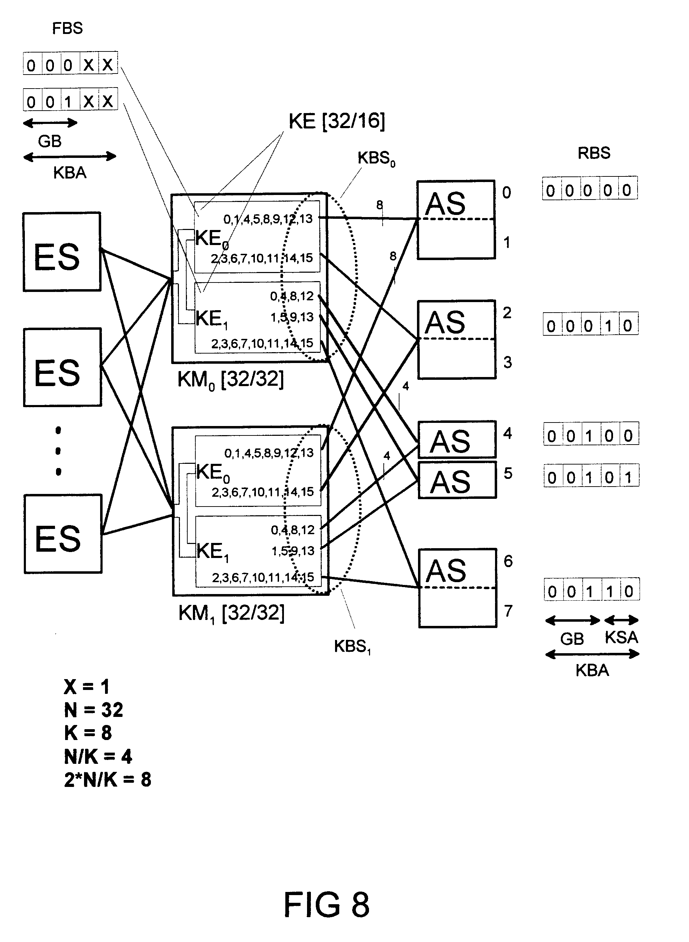

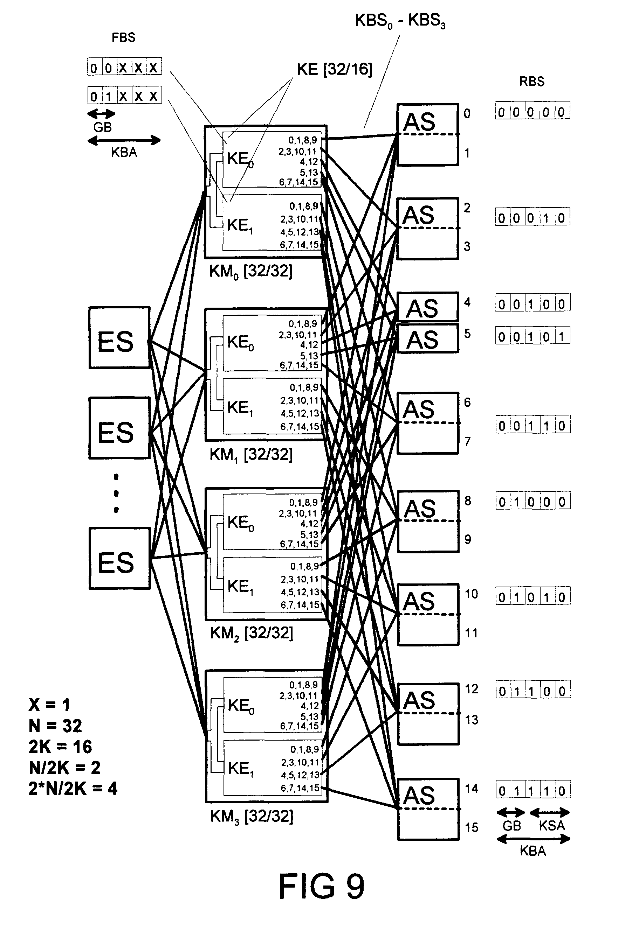

In den Figuren 4, 5, 8 und 9 sind weitere, konkret gehaltene Ausführungsbeispiele dargestellt. Hierbei wird in den Figuren 4 und 8 jeweils auf eine Vermittlungseinrichtung mit zwei Koppelmodulen $KM_{0-1}$ [32/32] Bezug genommen (d.h. N = 32), die in den Figuren 5 und 9 jeweils um zwei weitere Koppelmodule $KM_{2-3}$ [32/32] erweitert werden. In den Figuren 4 und 5 sind die Koppelmodule KM jeweils durch je ein Koppelelement KE [32/32] realisiert (d.h. X = 0), während in den Figuren 8 und 9 die Koppelmodule KM jeweils durch je zwei Koppelelement KE [32/16] bewirkt werden (d.h. X = 1). In beiden Vermittlungseinrichtungen sind vor der Erweiterung jeweils fünf Ausgangsstufen AS in folgender Ausführung an die Koppelmodule $KM_0$ - $KM_1$ angeschlossen: 1) doppelter, 2) doppelter, 3) einfacher, 4) einfacher und 5) doppelter Durchsatz. Hierbei sind die Ausgangsstufen AS derart dimensioniert, dass alle Ausgänge A der Koppelmodule KM belegt sind (d.h. K = 8).

Somit lassen sich die Adressräume der Kanalbündel KB aus den in den Figuren 1 und 2 dargestellten Formeln herleiten, indem folgende Werte eingesetzt werden

- Figur 4: X = 0, N = 32, K = 8 in die Formeln der Figur 1
- Figur 5: X = 0, N = 32, 2K = 16 in die Formeln der Figur 2 bzw. K = 16 in die Formeln der Figur 1
- Figur 8: X = 1, N = 32, K = 8 in die Formeln der Figur 1
- Figur 9: X = 1, N = 32, 2K = 16 in die Formeln der Figur 2 bzw. K = 16 in die Formeln der Figur 1

Dies führt beispielsweise in der Vermittlungseinrichtung nach Figur 4 zu folgenden Kanalbündeln KB:

1) Kanalbündel $KB_0$ mit Kanälen 0,1,8,9,16,17,24,25
2) Kanalbündel $KB_2$ mit Kanälen 2,3,10,11,18,19,26,27
3) Kanalbündel $KB_4$ mit Kanälen 4,12,20,28
4) Kanalbündel $KB_5$ mit Kanälen 5,13,21,29
5) Kanalbündel $KB_6$ mit Kanälen 6,7,14,15,22,23,30,31

Nach Erweiterung der Vermittlungsanlage um ein zweites Koppelmodule KM [32/32] - siehe Figur 5 - sind diese Kanalbündel KB nach Halbierung der Anzahl der zugeordneten Kanäle wie folgt ausgebildet:

1) Kanalbündel $KB_0$ mit Kanälen 0,1,16,17
2) Kanalbündel $KB_2$ mit Kanälen 2,3,18,19
3) Kanalbündel $KB_4$ mit Kanälen 4,20
4) Kanalbündel $KB_5$ mit Kanälen 5,21
5) Kanalbündel $KB_6$ mit Kanälen 6,7,22,23

Sehr schön erkennbar ist, dass sich hierbei die Schrittweite K von ursprünglich K = 8 auf K = 16 verdoppelt hat. Nach dieser Umstellung der Kanalbündel KB können nun zusätzliche Kanalbündel $KB_{8-15}$ zum Anschluss neuer Ausgangsstufen AS angeschlossen werden, wobei dadurch, dass der Wert $Y_{KB}$ (definiert die maximale Anzahl von Kanälen pro Kanalbündel KB) für jedes Kanalbündel KB individuell festgelegt werden kann, die Vermittlungseinrichtung vorteilhaft wahlfrei entweder um Ausgangsstufen AS mit einfachem oder doppeltem Durchsatz erweiterbar wird. In den Figuren 5 und 9 ist beispielhaft eine Erweiterung um vier Ausgangsstufen AS mit doppeltem Durchsatz dargestellt, was in der Vermittlungseinrichtung nach Figur 5 zu folgenden zusätzlichen Kanalbündeln KB führt:

6) Kanalbündel $KB_8$ mit Kanälen 8,9,24,25

7) Kanalbündel $KB_{10}$ mit Kanälen 10,11,26,27
8) Kanalbündel $KB_{12}$ mit Kanälen 12,13,28,29
9) Kanalbündel $KB_{14}$ mit Kanälen 14,15,30,31

Analog führt das Einsetzen der obigen Werte in der Vermittlungseinrichtung nach Figur 8 zu folgenden Kanalbündeln KB:

1) Kanalbündel $KB_0$ mit Kanälen 0,1,4,5,8,9,12,13
2) Kanalbündel $KB_2$ mit Kanälen 2,3,6,7,10,11,14,15 mit Anschluss an die beiden Koppelelemente $KE_0$ und
3) Kanalbündel $KB_0$ mit Kanälen 0,4,8,12
4) Kanalbündel $KB_1$ mit Kanälen 1,5,9,13
5) Kanalbündel $KB_2$ mit Kanälen 2,3,6,7,10,11,14,15 mit Anschluss an die beiden Koppelelemente $KE_1$.

Nach Erweiterung der Vermittlungsanlage um ein zweites Koppelmodul KM [32/32] - siehe Figur 9 - sind diese Kanalbündel KB nach Halbierung der Anzahl der zugeordneten Kanäle wie folgt ausgebildet:

1) Kanalbündel $KB_0$ mit Kanälen 0,1,8,9
2) Kanalbündel $KB_2$ mit Kanälen 2,3,10,11
3) Kanalbündel $KB_4$ mit Kanälen 4,12
4) Kanalbündel $KB_5$ mit Kanälen 5,13
5) Kanalbündel $KB_6$ mit Kanälen 6,7,14,15 mit Anschluss an die vier Koppelelemente $KE_0$.

Sehr schön erkennbar ist, dass sich hierbei die Schrittweite $K/2^X$ von ursprünglich K = 4 auf K = 8 verdoppelt hat. Des weiteren ist zu erkennen, dass die beide Schrittweiten halb so groß sind wie die bei den in den Figuren 4 und 5 dargestellten Vermittlungseinrichtungen. Hierdurch wird berücksichtigt, dass die Koppelelemente 32/16 nur halb so viele Ausgänge A aufweisen wie die Koppelelemente 32/32.
Nach dieser Umstellung der Kanalbündel KB können nun zusätzliche Kanalbündel $KB_{0-7\,(8-15)}$ zum Anschluss neuer Ausgangsstufen AS an die vier Koppelelemente $KE_1$ angeschlossen werden, wobei dadurch, dass der Wert $Y_{KB}$ (definiert die maximale Anzahl von Kanälen pro Kanalbündel KB) für jedes Kanalbündel KB individuell festgelegt werden kann, die Vermittlungseinrichtung vorteilhaft wahlfrei entweder um Ausgangsstufen AS mit einfachem oder doppeltem Durchsatz erweitert werden kann. Wie in Figur 5 ist auch in Figur 9 beispielhaft eine Erweiterung um vier Ausgangsstufen AS mit doppeltem Durchsatz dargestellt, was in der Vermittlungseinrichtung nach Figur 9 zu folgenden zusätzlichen Kanalbündeln KB führt:

6) Kanalbündel $KB_{0\,(8)}$ mit Kanälen 0,1,8,9
7) Kanalbündel $KB_{2\,(10)}$ mit Kanälen 2,3,10,11
8) Kanalbündel $KB_{4\,(12)}$ mit Kanälen 4,5,12,13
9) Kanalbündel $KB_{6\,(14)}$ mit Kanälen 6,7,14,15 mit Anschluss an die vier Koppelelemente $KE_1$.

Die Unterschiede in der Adressbildung ergeben sich dadurch, dass sich eine Kanaladresse KA für X > 0 durch Voranstellen der Gruppenadresse GA vor die Kanalsubadresse KSA des Kanals ergibt. Somit können die Verkehrsströme einerseits in den Eingangsstufen ES gemäß einem einheitlich mit Kanaladressen KA bewirkten Routingbit-Schema RBS, d.h. unabhängig von dem Wert X und somit von der Realisierung der Koppelmodule KM, gekennzeichnet und andererseits in den Koppelelementen KE einheitlich mit Hilfe von einem jeweils mit Kanalsubadresse 0 beginnenden Adressierungs-Schema vermittelt werden. Die Verteilung der Verkehrsströme auf die entsprechenden Koppelelemente $KE_{GA}$ erfolgt mit Hilfe der Gruppenadressen GA durch ein sog. Filterbit-Schema FBS. Das jeweilige Routingbit-Schema RBS ist in den Figuren 4, 5, 8 und 9 für alle Ausgangsstufen AS, das jeweilige Filterbit-Schema FBS in den Figuren 8 und 9 jeweils für die Koppelmodule KM angedeutet.
In den Koppelelementen KE sind die Verkehrsströme einheitlich lediglich mit Kanalbündeladressen KBA gekennzeichnet. Da die Zuordnung der Kanäle zu Kanalbündeln KB im Zuge der Umkonfiguration eines Kanalbündelsystems KBS wechseln kann - wie z.B. bei der Erweiterung der Vermittlungseinrichtung gezeigt -, ist für die in den Koppelelemente KE vorgesehene Aufteilungsfunktion, von der vermittelte Verkehrsströme auf die einzelnen Kanäle eines Kanalbündel KB aufgeteilt werden, eine Anzeige des Wertes $K/2^X$ (Schrittweite) sowie der Werte $Y_{KB}$ erforderlich, wodurch die jeweils aktuelle Zuordnung der Kanäle zu Kanalbündeln KB hinreichend beschrieben wird.

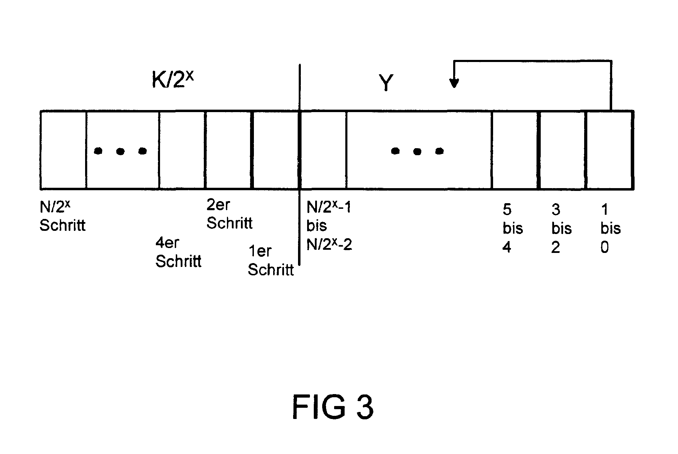

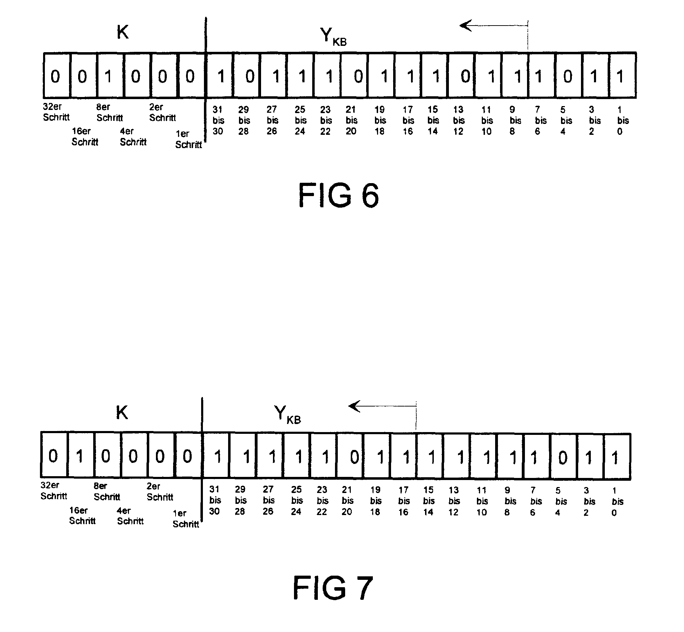

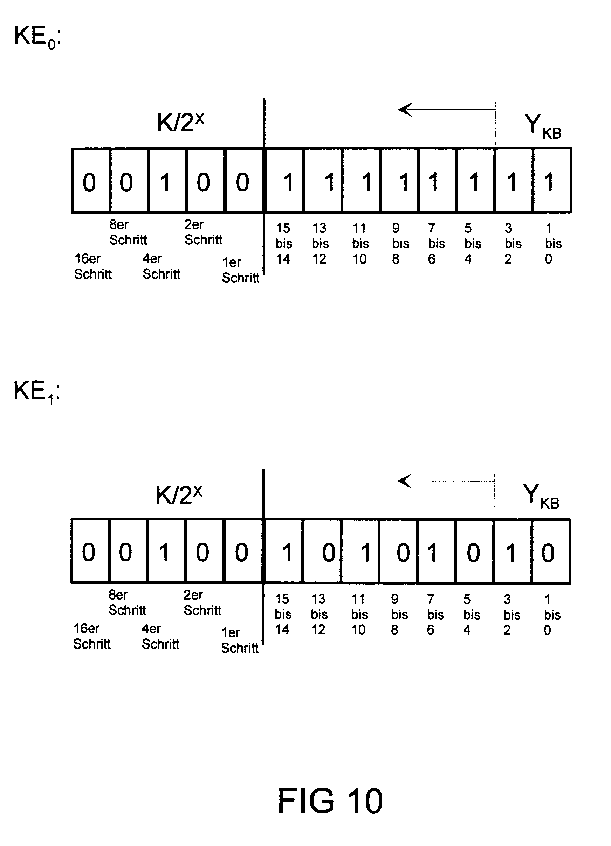

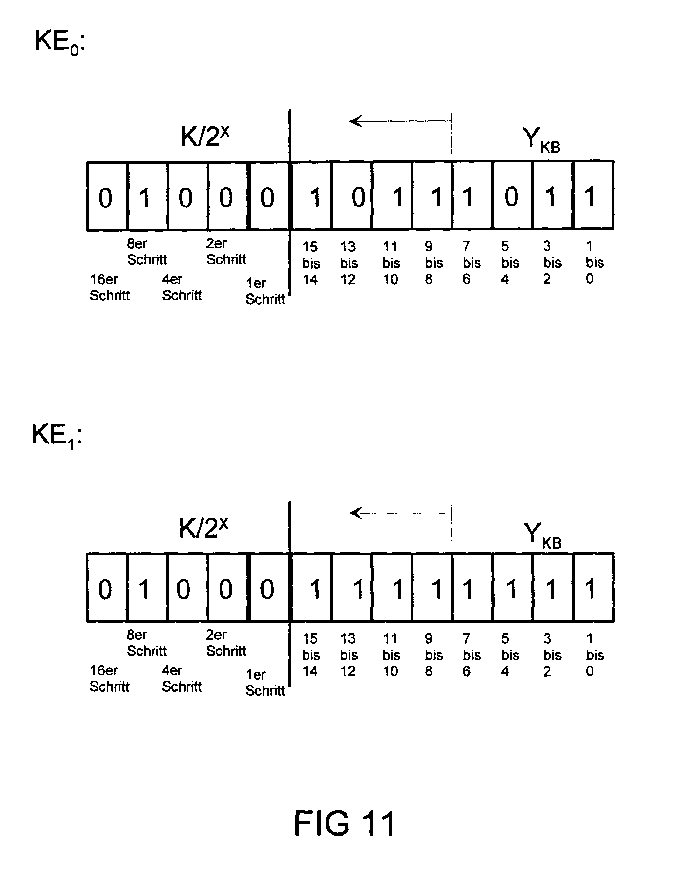

In Figur 3 ist hierzu eine Möglichkeit zur Anzeige der Werte aufgezeigt. Dabei wird einerseits für jedes Kanalbündel KB mit einer geradzahligen Kanalbündeladresse KBA jeweils durch ein Bit angezeigt, ob von der zugehörigen Ausgangsstufe AS Verkehrsströme mit einfachem (d.h. Y = 1) oder doppeltem (d.h. Y = 2) Durchsatz übermittelt werden, wobei durch einen Bitwert 0 doppelter und durch einen Bitwert 1 einfacher Durchsatz angezeigt wird. Im Summe sind hierfür $N/2^{X+1}$ Bits erforderlich, d.h. bei einem Koppelelement KE [32/32] z.B. 16 Bits (siehe auch Figuren 6 & 7) und bei einem Koppelelement KE [32/16] z.B. acht Bits (siehe auch Figuren 10 & 11). Die Schrittweite $K/2^X$ wird z.B. dadurch angezeigt, dass für jede zulässige Schrittweite ein Bit vorgesehen ist und die eingestellte Schrittweite durch einen Bitwert 1 angezeigt wird, wobei zu jedem Zeitpunkt genau eines der Bits diesen Wert aufweist und allen anderen einen Bitwert 0. Beide Bitsequenzen könnten z.B. in einem Register gespeichert werden, das z.B. in jedem der Koppelelemente KE vorgesehen ist.

Diese Bitsequenz ist z.B. in Figur 6 für die in Figur 4, in Figur 7 für die in Figur 5, in Figur 10 für die in Figur 8 und in Figur 11 für die in Figur 9 dargestellte Koppeleinrichtung skizziert. Hierbei sind wegen X = 1 in den Figuren 10 & 11 jeweils zwei Bitsequenzen dargestellt, eine für die Koppelelemente $KE_0$ und eine für die Koppelelemente $KE_1$. In allen Bitsequenzen korrespondiert die zyklische Wiederholung in den die Wert $Y_{KB}$ anzeigenden Bits mit der jeweiligen Schrittweite.

In allen ausgeführten Vermittlungseinrichtungen sind vorteilhaft die Adressen der $N/2^x$ Ausgänge A der Koppelelemente KE mit den Kanalsubadressen identisch. Somit entfällt die ansonsten erforderliche Adressanpassungsfunktion.

**Patentansprüche**

1. Kanalbündelsystem (KBS) mit folgenden Merkmalen:

   - das System umfasst bis zu N Kanäle mit $N = 2^M$ und $0 \leq M$, die mit Kanaladressen (KA) 0 .. N-1 adressiert sind,
   - die Kanäle sind zu maximal K Kanalbündeln (KB) mit $K = 2^L$ und $0 \leq L \leq M$ zusammengefasst,
   - jedes Kanalbündel (KB) umfasst bis zu $Y_{KB}*N/K$ Kanäle, $1 \leq Y_{KB} \leq K$, wobei $Y_{KB}$ für jedes Kanalbündel (KB) individuell festgelegt ist,
   - die Kanaladressen (KA) der zu einem bestimmten Kanalbündel (KB) zusammengefassten Kanäle sind in dem Kanaladressraum

$$\{ (Z_{KB}+i) + j*K \mid 0 \leq i \leq Y_{KB}-1, 0 \leq j \leq N/K-1 \}$$

   enthalten, wobei $Z_{KB}$, $0 \leq Z \leq K-Y_{KB}$, die Kanaladresse (KA) des Kanals mit der niedrigsten, für dieses Kanalbündel (KB) zulässigen Kanaladresse (KA) ist.

2. Kanalbündelsystem (KBS) nach Anspruch 1,
   **dadurch gekennzeichnet,**
   **dass** $1 \leq Y_{KB} \leq 2$.

3. Kanalbündelsystem (KBS) nach einem der Ansprüche 1 oder 2, **gekennzeichnet durch** folgende weitere Merkmale:

   - die Kanäle sind in $2^x$ Kanalgruppen zu je $N/2^X$ Kanälen mit $1 \leq X \leq M$ gruppiert, wobei jeder Kanal genau einer Kanalgruppe zugeordnet ist,
   - die Kanalgruppen sind linear mit Gruppenadressen (GA) 0 .. $2^X$-1 adressiert,
   - die Kanäle sind in jeder der Kanalgruppen linear mit Kanalsubadressen (KSA) 0 .. $N/2^x$-1 adressiert,
   - die Kanaladresse (KA) eines bestimmten Kanals ergibt sich **durch** Voranstellen der Gruppenadresse (GA) vor die Kanalsubadresse (KSA) des Kanals.
   - die Kanalsubadressen (KSA) der zu einem bestimmten Kanalbündel (KB) zusammengefassten Kanäle sind in dem Kanalsubadressraum

$$\{ (Z_{KB}+i) - S*K/2^X + j*K/2^X \mid 0 \leq i \leq Y_{KB}-1, 0 \leq j \leq N/K-1 \}$$

   enthalten, wobei $Z_{KB}$, $0 \leq Z_{KB} \leq K-Y_{KB}$, die Kanaladresse (KA) des Kanals mit der niedrigsten, für dieses Kanalbündel (KB) zulässigen Kanaladresse (KA) und S, $0 \leq S \leq 2^X-1$, die Gruppenadresse (GA) der zugehörigen Kanalgruppe ist.

4. Kanalbündelsystem (KBS) nach Anspruch 3,
   **dadurch gekennzeichnet,**

**dass** $Z_{KB}$ - S*K/$2^x$ jeweils als Kanalbündeladresse (KBA) des zugehörigen Kanalbündels (KB) ausgebildet ist.

5. Vermittlungseinrichtung nach einem der Ansprüche 1 bis 4 mit:

   - zumindest einer Eingangsstufe (ES),
   - zumindest einem Koppelmodul (KM) mit N Eingangskanälen (E) und N Ausgangskanälen (A),
   - zumindest einer Ausgangsstufe (AS), und
   - zumindest einem Kanalbündelsystem (KBS) zur Verbindung des Koppelmoduls (KM) mit den Ausgangsstufen (AS).

6. Vermittlungseinrichtung nach Anspruch 5,
   **dadurch gekennzeichnet,**
   **dass** jedes Koppelmodul (KM) durch ein separates Kanalbündelsystem (KBS) mit den Ausgangsstufen (AS) verbunden ist.

7. Vermittlungseinrichtung nach einem der Ansprüche 3 oder 4 und einem der Ansprüche 5 oder 6,
   **dadurch gekennzeichnet,**
   **dass** bei einem mit $2^X$ Koppelelementen (KE) mit jeweils N Eingangskanälen (E) und N/$2^X$ Ausgangskanälen (A) realisierten Koppelmodul (KM) die Adressen der Ausgangskanäle (A) der Koppelelemente (KE) mit den Kanalsubadressen (KSA) identisch sind.

8. Vermittlungseinrichtung nach einem der Ansprüche 3 oder 4 und einem der Ansprüche 5 bis 7,
   **dadurch gekennzeichnet,**
   **dass** dem Koppelmodul (KM) der Wert K/$2^X$ sowie zumindest für jedes genutzte Kanalbündel (KB) der Wert $Y_{KB}$ angezeigt wird.

$KBS_0$

$\{$ KA/KSA $(KB_0)$ | max. $2*N/K$ $\}$:
$0 - 0*K/2^x + 0*K/2^x$, $1 - 0*K/2^x + 0*K/2^x$
$0 - 0*K/2^x + 1*K/2^x$, $1 - 0*K/2^x + 1*K/2^x$
$0 - 0*K/2^x + 2*K/2^x$, $1 - 0*K/2^x + 2*K/2^x$
.
.
$0 - 0*K/2^x + (N/K-1)*K/2^x$, $1 - 0*K/2^x + (N/K-1)*K/2^x$

$\{$ KA/KSA $(KB_2)$ | max. $2*N/K$ $\}$:
$2 - 0*K/2^x + 0*K/2^x$, $3 - 0*K/2^x + 0*K/2^x$
$2 - 0*K/2^x + 1*K/2^x$, $3 - 0*K/2^x + 1*K/2^x$
$2 - 0*K/2^x + 2*K/2^x$, $3 - 0*K/2^x + 2*K/2^x$
.
$2 - 0*K/2^x + (N/K-1)*K/2^x$, $3 - 0*K/2^x + (N/K-1)*K/2^x$

$\{$ KA/KSA $(KB_{K-2})$ | max. $N/K$ $\}$:
$(K-2) - (2^x-1)*K/2^x + 0*K/2^x$
$(K-2) - (2^x-1)*K/2^x + 1*K/2^x$
$(K-2) - (2^x-1)*K/2^x + 2*K/2^x$
.
.
$(K-2) - (2^x-1)*K/2^x + (N/K-1)*K/2^x$

$X = 0$: KA
$X > 0$: KSA

$\{$ KA/KSA $(KB_{K-1})$ | max. $N/K$ $\}$:
$(K-1) - (2^x-1)*K/2^x + 0*K/2^x$
$(K-1) - (2^x-1)*K/2^x + 1*K/2^x$
$(K-1) - (2^x-1)*K/2^x + 2*K/2^x$
.
.
$(K-1) - (2^x-1)*K/2^x + (N/K-1)*K/2^x$

ES

ES

E    $KE_0$    A
$[N/(N/2^x)]$

$KE_{2^x-1}$
$[N/(N/2^x)]$

$KB_0$
$KB_2$
$KB_{K-2}$
$KB_{K-1}$

AS  0
    1
AS  2
    3
AS  K-2
AS  K-1

$KM_0$ $[N/N]$

FIG 1

FIG 2

EP 1 178 633 A1

13

K/2$^x$     Y

N/2$^x$ Schritt

4er Schritt

2er Schritt

1er Schritt

N/2$^x$-1 bis N/2$^x$-2

5 bis 4

3 bis 2

1 bis 0

## FIG 3

# FIG 4

X = 0
N = 32
K = 8
N/K = 4
2*N/K = 8

ES     ...     ES     ES

KM₁ [32/32]

KE₀

6,7,14,15,22,23,30,31

2,3,10,11,18,19,26,27

0,1,8,9,16,17,24,25

5,13,21,29

4,12,20,28

KBS₁

KM₀ [32/32]

KE₀

6,7,14,15,22,23,30,31

0,1,8,9,16,17,24,25

2,3,10,11,18,19,26,27

5,13,21,29

4,12,20,28

KBS₀

AS 7   AS 6   AS 5   AS 4   AS 3   AS 2   AS 1   AS 0

RBS

| 0 | 0 | 1 | 1 | 0 |
| 0 | 0 | 1 | 0 | 1 |
| 0 | 0 | 1 | 0 | 0 |
| 0 | 0 | 0 | 1 | 0 |
| 0 | 0 | 0 | 0 | 0 |

KBA

FIG 5

K

$Y_{KB}$

| 0 | 0 | 1 | 0 | 0 | 0 | 1 | 0 | 1 | 1 | 1 | 0 | 1 | 1 | 1 | 0 | 1 | 1 | 1 | 0 | 1 | 1 |

32er
Schritt

8er
Schritt

2er
Schritt

16er
Schritt

4er
Schritt

1er
Schritt

| 31 bis 30 | 29 bis 28 | 27 bis 26 | 25 bis 24 | 23 bis 22 | 21 bis 20 | 19 bis 18 | 17 bis 16 | 15 bis 14 | 13 bis 12 | 11 bis 10 | 9 bis 8 | 7 bis 6 | 5 bis 4 | 3 bis 2 | 1 bis 0 |

# FIG 6

K

$Y_{KB}$

| 0 | 1 | 0 | 0 | 0 | 0 | 1 | 1 | 1 | 1 | 1 | 0 | 1 | 1 | 1 | 1 | 1 | 1 | 1 | 0 | 1 | 1 |

32er
Schritt

8er
Schritt

2er
Schritt

16er
Schritt

4er
Schritt

1er
Schritt

| 31 bis 30 | 29 bis 28 | 27 bis 26 | 25 bis 24 | 23 bis 22 | 21 bis 20 | 19 bis 18 | 17 bis 16 | 15 bis 14 | 13 bis 12 | 11 bis 10 | 9 bis 8 | 7 bis 6 | 5 bis 4 | 3 bis 2 | 1 bis 0 |

# FIG 7

17

FIG 8

FIG 9

$KE_0$:

$K/2^x$       $Y_{KB}$

| 0 | 0 | 1 | 0 | 0 | 1 | 1 | 1 | 1 | 1 | 1 | 1 | 1 |

8er Schritt    2er Schritt

16er Schritt    4er Schritt    1er Schritt

15 bis 14   13 bis 12   11 bis 10   9 bis 8   7 bis 6   5 bis 4   3 bis 2   1 bis 0

$KE_1$:

$K/2^x$       $Y_{KB}$

| 0 | 0 | 1 | 0 | 0 | 1 | 0 | 1 | 0 | 1 | 0 | 1 | 0 |

8er Schritt    2er Schritt

16er Schritt    4er Schritt    1er Schritt

15 bis 14   13 bis 12   11 bis 10   9 bis 8   7 bis 6   5 bis 4   3 bis 2   1 bis 0

# FIG 10

KE$_0$:

$$K/2^x \qquad \qquad Y_{KB}$$

| 0 | 1 | 0 | 0 | 0 | 1 | 0 | 1 | 1 | 1 | 0 | 1 | 1 |
|---|---|---|---|---|---|---|---|---|---|---|---|---|

|  | 8er Schritt |  | 2er Schritt |  | 15 bis 14 | 13 bis 12 | 11 bis 10 | 9 bis 8 | 7 bis 6 | 5 bis 4 | 3 bis 2 | 1 bis 0 |
| 16er Schritt |  | 4er Schritt |  | 1er Schritt | | | | | | | | |

KE$_1$:

$$K/2^x \qquad \qquad Y_{KB}$$

| 0 | 1 | 0 | 0 | 0 | 1 | 1 | 1 | 1 | 1 | 1 | 1 | 1 |
|---|---|---|---|---|---|---|---|---|---|---|---|---|

|  | 8er Schritt |  | 2er Schritt |  | 15 bis 14 | 13 bis 12 | 11 bis 10 | 9 bis 8 | 7 bis 6 | 5 bis 4 | 3 bis 2 | 1 bis 0 |
| 16er Schritt |  | 4er Schritt |  | 1er Schritt | | | | | | | | |

# FIG 11

| | Europäisches Patentamt | EUROPÄISCHER RECHERCHENBERICHT | Nummer der Anmeldung EP 00 11 6724 |
|---|---|---|---|

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| X | US 5 461 615 A (HENRION MICHEL) 24. Oktober 1995 (1995-10-24) * Spalte 1, Zeile 19 - Spalte 3, Zeile 10 * * Spalte 3, Zeile 26-34 * | 1 | H04L12/56 H04Q11/04 |
| A | KAZUHIRO OHTSUKI ET AL: "A PACKET SWITCH ARCHITECTURE WITH CHANNEL GROUP VIRTUAL CIRCUIT SCHEME IN HIGH-SPEED COMMUNICATION NETWORKS" ELECTRONICS & COMMUNICATIONS IN JAPAN, PART I - COMMUNICATIONS,US,SCRIPTA TECHNICA. NEW YORK, Bd. 75, Nr. 1, 1992, Seiten 1-10, XP000307108 ISSN: 8756-6621 * Seite 3, linke Spalte, Zeile 35-46 * * Seite 5, linke Spalte, Zeile 19-21 * | 1 | |
| A | DE 41 30 318 A (STANDARD ELEKTRIK LORENZ AG) 18. März 1993 (1993-03-18) * Zusammenfassung * | 1 | RECHERCHIERTE SACHGEBIETE (Int.Cl.7) H04Q H04L |

Der vorliegende Recherchenbericht wurde für alle Patentansprüche erstellt

| Recherchenort DEN HAAG | Abschlußdatum der Recherche 10. Januar 2001 | Prüfer Dhondt, E |
|---|---|---|

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 00 11 6724

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

10-01-2001

| Im Recherchenbericht angeführtes Patentdokument | | Datum der Veröffentlichung | Mitglied(er) der Patentfamilie | | Datum der Veröffentlichung |
|---|---|---|---|---|---|
| US 5461615 | A | 24-10-1995 | FR | 2703545 A | 07-10-1994 |
| | | | CA | 2120291 A | 01-10-1994 |
| | | | DE | 69424216 D | 08-06-2000 |
| | | | DE | 69424216 T | 28-12-2000 |
| | | | EP | 0618705 A | 05-10-1994 |
| | | | ES | 2146248 T | 01-08-2000 |
| | | | JP | 7007513 A | 10-01-1995 |
| DE 4130318 | A | 18-03-1993 | KEINE | | |

EPO FORM P0461

Für nähere Einzelheiten zu diesem Anhang siehe Amtsblatt des Europäischen Patentamts, Nr. 12/82